# EUROPEAN PATENT APPLICATION

(11) **EP 4 703 983 A1**
(43) Date of publication of application: **04.03.2026**
(21) Application number: 24223681.8
(22) Date of filing: 30.12.2024
(51) Int. Cl.: G06Q 10/00, G06Q 10/06, G06Q 10/0631, G06Q 10/087

(54) **HIGH-EFFICIENCY PRODUCT CARBON FOOTPRINT INVENTORY SYSTEM AND METHOD**

(30) Priority: 27.08.2024 CN 202411181332
(71) Applicant: Cedars Digital Pte. Ltd., 048619 Singapore (SG)
(72) Inventor: CHEN, Fu-Ming, New Taipei City (TW); CHEN, Ching-Yi, Taipei City (TW); TSAI, Yu-Ting, New Taipei City (TW); TAI, Shih-Chieh, Taipei City (TW); WU, Ling-Ying, New Taipei City (TW); CHANG, Mao-Yen, Changbin Township, Taitung County (TW)
(74) Representative: Viering, Jentschura & Partner mbB Patent- und Rechtsanwälte

(57) **Abstract**

A high-efficiency product carbon footprint inventory system (300) and a high-efficiency product carbon footprint inventory method are provided. The high-efficiency product carbon footprint inventory system (300) includes a server system to perform calculation, storage, and data transmission in the high-efficiency product carbon footprint inventory system (300). The server system includes an operational boundary database (310) and an energy resource setting module (336) for receiving data provided by multiple data sources, including operational boundary organizational greenhouse gas inventory data, a production material list or a procurement material list, work order production information, data of operational boundary sales record (303), and supplier emission factor data (304) of an operational boundary. The server system uses a computer system to implement the high-efficiency product carbon footprint inventory method, calculate an organization-wide product/service carbon footprint, and issue carbon-related management documents.

## Description

### FIELD OF THE DISCLOSURE

The present invention relates to a product carbon footprint inventory solution, and more particularly to a high-efficiency product carbon footprint inventory system and method that use relevant data structures and computer technology to issue carbon-related management documents according to the requirements of different stakeholders.

### BACKGROUND OF THE DISCLOSURE

Greenhouse gas (GHG) refers to a gas that can absorb and re-radiate infrared radiations emitted from the surface of the earth. Greenhouse gas mainly includes carbon dioxide (CO₂), methane (CH₄), nitrous oxide (N₂O), hydrofluorocarbons (HFCs), perfluorocarbons (PFCs), sulfur hexafluoride (SF₆), nitrogen trifluoride (NF₃), etc. The increase of these gases is mainly a result of human activities such as burning fossil fuel, industrial manufacturing, and agricultural activities which can lead to global warming, extreme weather events, rising sea levels, etc., leading to a serious impact on humanity and the ecosystem.

To achieve goals such as net-zero carbon reduction and carbon neutrality, enterprises in various countries need to effectively conduct product carbon footprint inventories and establish carbon reduction strategies. The product carbon footprint refers to the greenhouse gas emissions generated by the life cycle stages of the product from raw material acquisition, manufacturing, distribution and sales, use and disposal; or the greenhouse gas emissions generated by the service from the raw material acquisition, service and disposal life cycle stages that are converted to a sum of carbon dioxide equivalents.

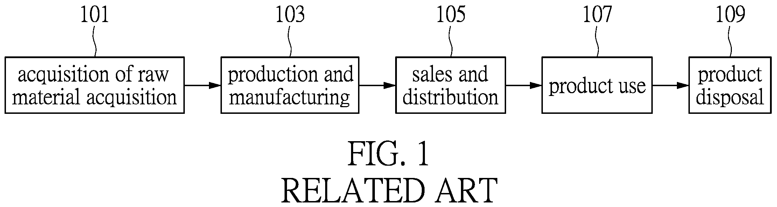

FIG. 1 is a schematic diagram of a procedural flow of a product carbon footprint being formed, which represents the processes in which an industrial product emits greenhouse gases from production to disposal; for example, in the upstream supply chain, greenhouse gases will be emitted during raw material acquisition 101 and production and manufacturing 103, and in the downstream supply chain, the greenhouse gases will be emitted during sales and distribution 105 in which products are delivered to users, as well as during a product use 107. Further, greenhouse gases will also be emitted during a final product disposal 109.

After the carbon footprint inventory, tools can be used to calculate the greenhouse gas emissions of the entire manufacturing process. The emission factor will be set according to the different levels of carbon emissions at different stages in the manufacturing process. Therefore, the amount of raw materials used at each stage can be multiplied by the emission factor to calculate carbon emissions.

After completing the calculation of the product carbon footprint, one of the uses of the calculation is to apply for the carbon footprint label of each country. The carbon reduction label launched by the British government in 2006 was the first carbon label in the world. Through the implementation of the carbon labeling system, the sources of carbon emissions at each stage of products/services can be configured to be transparent, prompting enterprises to adjust their products/services at hotspots having larger carbon emissions, and also prompting consumers to use products properly to achieve a maximized effect of reducing the carbon footprint of products/services.

A second use of the calculation is to use the product/service carbon emission information provided by a company to the upstream and downstream supply chains to assist other companies in improving their organizational greenhouse gas inventory or product carbon footprint/service calculations, such that the companies can reference primary data or specific location data.

A third use of the calculation is for companies to declare carbon border tariffs. For example, the EU carbon border adjustment mechanism (CBAM) provides information on product carbon emissions to EU importers, and the EU importers then make the declarations.

Taking the footprint calculation of a laptop model as an example, the acquisition of raw materials includes the carbon emissions of the raw materials and the carbon emissions of transportation. Taking the carbon emission calculation of the raw materials themselves as an example, the following information and supporting evidence need to be obtained before calculation can be performed.

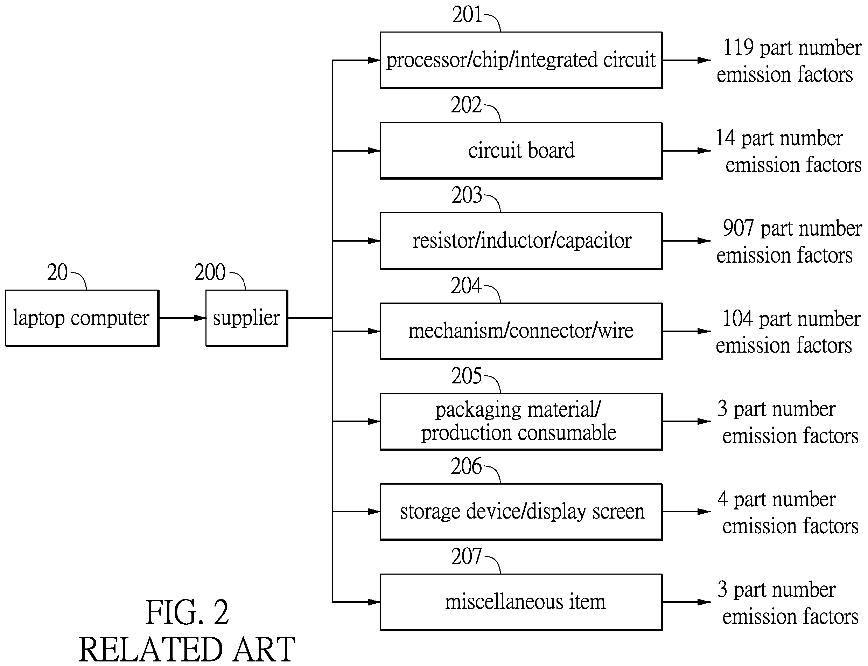

Referring to FIG. 2, FIG. 2 is an emission factor correlation network diagram of products, components, and suppliers for the components. This example shows the emission factor of obtaining relevant goods or services of a certain model of a laptop computer 20, and manufacturing the laptop computer 20 requires one hundred and forty-eight suppliers 200, and all of the components have a total of 1,154 part numbers. The emission factors of related part numbers include part number emission factors of one hundred and nineteen processors/chips/integrated circuits 201, part number emission factors of fourteen circuit boards 202, part number emission factors of nine hundred and seven resistors/inductors/capacitors 203, part number emission factors of one hundred and four mechanisms/connectors/wires 204, part number emission factors of three packaging materials/production consumables 205, part number emission factors of four storage devices/display screens 206, and part number emission factors of three miscellaneous items 207. In this way, the carbon emissions of the laptop computer 20 from production to subsequent processing can be calculated.

Existing product/service carbon footprint inventory uses spreadsheets (such as those from Microsoft Excel^{®} or a specific electronic platform) to calculate the carbon footprint of a product each year. However, regardless of which method is used, a lot of manpower and time must be spent on collecting information and supporting data from outsourcing factories and upstream and downstream supply chains, so as to calculate the carbon footprint of products or services of the enterprise operation.

If an enterprise needs to calculate the carbon footprint of products/services for multiple product lines, series, and part numbers, different spreadsheets or electronic platform projects must be created for respectively inputting, calculating, and uploading supporting information. Nearly half of the data is repeatedly uploaded to different spreadsheets or electronic platform projects, which takes up a lot of manpower and time to execute such complex inventory processes.

### SUMMARY OF THE DISCLOSURE

In view of the current lack of efficient implementation of carbon inventory solutions, the present invention provides a high-efficiency product carbon footprint inventory system and a high-efficiency product carbon footprint inventory method, which provide solutions based on information such as a carbon data structure, database links, data collection, and a carbon emission calculation algorithm. The solution can simultaneously calculate an all-product carbon footprint inventory and service operated by an enterprise on a same project, and can instantly issue carbon-related management documents that meet the requirements of different stakeholders, thereby addressing the above-mentioned difficulties for the enterprise.

According to the embodiment, the high-efficiency product carbon footprint inventory system provides a server system for performing calculation, storage, and data transmission in the high-efficiency product carbon footprint inventory system to run the high-efficiency product carbon footprint inventory system. The server system includes an operational boundary database obtaining information provided by multiple data sources, including operational boundary organizational greenhouse gas inventory data, an operational boundary work order and a production material list or a procurement material list, data of operational boundary sales record, and supplier emission factor data of an operational boundary.

The server system mainly includes a raw material acquisition carbon emission module, a manufacturing/service carbon emission module, a sales and distribution carbon emission module, a used carbon emission module, a disposed carbon emission module, and an energy resource setting module that are implemented by a computer system.

Furthermore, the raw material acquisition carbon emission module enables the enterprise to calculate raw material acquisition carbon emissions for the product lines, series, and part numbers of the all-product carbon footprint inventory and service; the manufacturing/service carbon emission module enables the enterprise to calculate manufacturing carbon emissions for the product lines, series, and part numbers of the all-product carbon footprint inventory and service; the sales and distribution carbon emission module enables the enterprise to calculate sales and distribution carbon emissions for the product lines, series, and part numbers of the all-product carbon footprint inventory and service; the used carbon emission module enables the enterprise to calculate used carbon emissions for the product lines, series, and part numbers of the all-product carbon footprint inventory and service; the disposed carbon emission module enables the enterprise to calculate disposed carbon emissions for the product lines, series, and part numbers of the all-product carbon footprint inventory and service.

The energy resource setting module automatically allocates energy resources for manufacturing-related emission sources in the operational boundary organizational greenhouse gas inventory data of the enterprise, so that corresponding emission source proportions are assigned to product lines, series, and part numbers of all-product carbon footprint inventory and service.

Further, through the operation of the raw material acquisition carbon emission module, the manufacturing/service carbon emission module, the sales and distribution carbon emission module, the used carbon emission module, and the disposed carbon emission module, results of the carbon footprint inventory of products/services of finished/semi-finished products are generated by the system, and the results include carbon emissions of a full life cycle or a part of the full life cycle of the product lines, series, and part numbers of the all-product carbon footprint inventory and service calculated by the enterprise.

Furthermore, the server system includes a dashboard module to provide emissions and emission hotspot analysis reports that display the product lines, series, and part numbers of the all-product carbon footprint inventory and service to the enterprise.

The server system further includes has a reporting module to selectively issue corresponding inventory list and report of the product lines, series, and part numbers of the all-product carbon footprint inventory and service to the enterprise, and output a carbon-related management document according to a stakeholder demand format. The stakeholder demand format is a data format based on the requirements of national carbon labels, carbon border tariffs, brand factories, or supply chains.

Furthermore, the energy resource setting module is used for a manufacturing emission source setting, a product line and series exclusion setting, an allocation criterion setting, and a carbon border tariff setting.

The manufacturing emission source setting is to set the emissions of emission sources within the operational boundary of the enterprise, and select emission sources that are relevant to the product lines, series, and part numbers of the all-product carbon footprint inventory and service.

The above-mentioned allocation criterion setting is to give different allocation principles to the selected emission sources. The product line and series exclusion setting is for the selected emission sources to execute exclusion setting of product lines, series, and part numbers, so as to exclude emission sources exclusively for specific product lines, series, and part numbers.

The operational boundary organizational greenhouse gas inventory data of the enterprise obtained by the operational boundary database is third-party digital platform data or a carbon inventory table having a specific format provided by the operational boundary.

Further, the operation boundary database obtains data through the following modules. For example, a raw material emission factor module records a raw material emission factor and supporting data of the operational boundary; a transportation emission factor module records emission factors of raw material acquisition and transportation, waste transportation, and sales and distribution transportations; and a product/service emission factor module records the acquisition of finished product/semi-finished product information, a use scenario configuration, and a disposal scenario configuration.

Moreover, the system provides an application programming interface, and operational data, forms, or single activities of an organizational operational boundary are connected through the application programming interface, so that the operational boundary database obtains the operational boundary work order and the production material list or the procurement material list of the operational boundary that include production work orders and production materials or procurement material data of the organizational operational boundary within a duration. Therefore, the data of operational boundary sales record obtained by the operational boundary database includes sales data of the organizational operational boundary obtained through the application programming interface within the duration.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a schematic diagram of a procedural flow of a product carbon footprint being formed according to existing art;
FIG. 2 is an emission factor correlation network diagram of products, components, and their suppliers, according to an existing technology;
FIG. 3 is an architectural diagram of a high-efficiency product carbon footprint inventory system according to one embodiment of the present invention;
FIG. 4 is a schematic functional diagram of an energy resource setting module in the high-efficiency product carbon footprint inventory system according to one embodiment of the present invention;
FIG. 5 is a flowchart of one embodiment of a high-efficiency product carbon footprint inventory method; and
FIG. 6 is a flowchart of another embodiment of the high-efficiency product carbon footprint inventory method.

### DETAILED DESCRIPTION OF THE EXEMPLARY EMBODIMENTS

The present invention provides a high-efficiency product carbon footprint inventory system and a high-efficiency product carbon footprint inventory method. The method uses correlation data structure and computer technology to simultaneously calculate a product carbon footprint inventory of a complete product lines, series, and part numbers of operations of an enterprise. Multiple stages such as raw material acquisition, production, distribution, sales, use, and disposal form a product life cycle. The high-efficiency product carbon footprint inventory method can be based on the requirements of different stakeholders (such as domestic policies and regulations, transnational policy requirements, and international brand factories) to quickly and instantly issue carbon-related management documents.

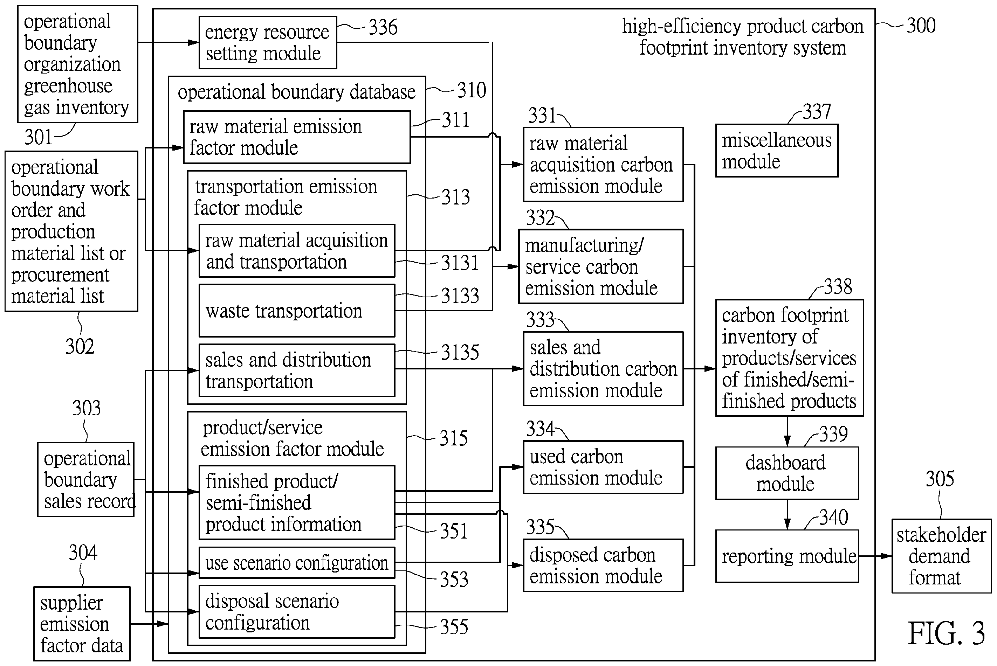

The system architecture of the high-efficiency product carbon footprint inventory system can be referred to in the embodiment diagram as shown in FIG. 3.

The figure shows a server system that implements calculation, storage, and data transmission in a high-efficiency product carbon footprint inventory system 300 through a computer system. The server system includes a plurality of functional modules implemented in collaboration with software and hardware (applications and circuit components), and the functional modules mainly include a raw material acquisition carbon emission module 331, a manufacturing/service carbon emission module 332, a sales and distribution carbon emission module 333, a used carbon emission module 334, a disposed carbon emission module 335, and an energy resource setting module 336 for running the high-efficiency product carbon footprint inventory system 300.

The high-efficiency product carbon footprint inventory system 300 includes an operational boundary database 310. The operational boundary database 310 is used to store and record operational boundary organizational greenhouse gas inventory data obtained from the enterprise. The data can be a third-party digital platform data or a carbon inventory table having a specific format provided by the operational boundary of the enterprise. According to the embodiment, the operational boundary database 310 may include a raw material emission factor module 311 implemented by computer system software and hardware used to record a raw material emission factor and supporting data of the operational boundary; a transportation emission factor module 313 used to record the emission factors of raw material acquisition and transportation 3131, waste transportation 3133, and sales and distribution transportation 3135; and a product/service emission factor module 315 used to record the acquisition of finished product/semi-finished product information 351, a use scenario configuration 353, and a disposal scenario configuration 355.

According to the connection relationship shown in the figure, the operational boundary database 310 accepts data provided by multiple data sources, such as data of an operational boundary organization greenhouse gas inventory 301 shown in the figure that mainly allows the energy resource setting module to execute various uses of the setting; an operational boundary work order and the production material list or a procurement material list 302, mainly provide the emission factor of raw material acquisition 311 and raw material acquisition and transportation 3131 in the operational boundary database 310; data of an operational boundary sales record 303 provides the emission factor of sales and distribution transportations 3135 obtained by the transportation emission factor module 313 in the operational boundary database 310, and the finished product/semi-finished product information 351, the use scenario configuration 353, and the disposal scenario configuration 355 obtained by the product/service emission factor module 315; and the supplier emission factor data 304 provide emission factor data in the operational boundary database 310 for upstream and downstream suppliers of the enterprise that are updated in real time and transmitted to the server system.

It is worth mentioning that, when an enterprise conducts a greenhouse gas inventory, the enterprise needs to collect various carbon emission data of relevant upstream and downstream suppliers of the products or services that are provided, so as to establish operational boundaries of each enterprise based on carbon footprints, and a stakeholder relationship network diagram between different operational boundaries can be established to filter out the required stakeholder relationship according to the requirements and output a carbon footprint report, thereby achieving the purpose of carbon footprint inventory. Furthermore, in addition to the operational boundaries of the enterprise, the diagram also includes one or more operational boundaries of one or more external enterprises related to the enterprise. The scope of the operational boundaries of the enterprise may include subsidiaries that need to be disclosed, enterprises with consolidated financial statements, investments, outsourcing factories, and upstream and downstream supply chains. The purpose of the diagram is to obtain carbon emission information that needs to be disclosed, including emission factors, emissions, and other related information.

According to the embodiment, in the high-efficiency product carbon footprint inventory system 300, the raw material acquisition carbon emission module 331 can obtain the calculated product lines and series of all-product carbon footprint inventory and service and the carbon emissions of raw materials for each part number provided by the enterprise from the operational boundary database 310. According to the connection relationship shown in the figure, the data sources of the raw material acquisition carbon emission module 331 include data provided to the transportation emission factor module 313 in the operational boundary database 310 by the operational boundary work order and the production material list or the procurement material list 302, and the data includes emission factors of the acquisition of raw materials 311 and the acquisition and transportation of raw materials 3131, so as to represent the process of generating carbon emissions.

According to one embodiment, the high-efficiency product carbon footprint inventory system 300 provides an application programming interface (API) through which the operational boundary work order and the production material list or the procurement material list 302 can be connected in series to obtain operational data, form, or single activities an organizational operational boundary. Therefore, the operational boundary database 310 is allowed to obtain the information of the operational boundary work order and the production material list or the procurement material list 302, which include data of the production work orders and production materials or procurement materials of the organizational operational boundary within a period.

Furthermore, the data of the sales record 303 of the operational boundary obtained by the operational boundary database 310 can also be sales data of the organizational operational boundary within a period obtained through the application program interface and provided by the high-efficiency product carbon footprint inventory system 300. Similarly, the data also includes operating data, forms, and various single activities, etc. of a specific enterprise.

In the high-efficiency product carbon footprint inventory system 300, the manufacturing/service carbon emission module 332 provides the ability to calculate the manufacturing carbon emissions of the product lines, series, and part numbers for the all-product carbon footprint inventory and service to the enterprise. The data sources include information after the energy resource setting module 336 performs the allocation of emission source proportions for various energy resources, and the emission factor of the waste transportation 3133 in the transportation emission factor module 313 of the operational boundary database 310.

In the high-efficiency product carbon footprint inventory system 300, the sales and distribution carbon emission module 333 provides the ability to calculate sales and distribution carbon emissions of the product lines, series, and part numbers for all-product carbon footprint inventory and service to the enterprise. The data source is mainly data provided by the operational boundary sales record 303 to the operational boundary database 310, such as the emission factor of sales and distribution transportation 3135 in the transportation emission factor module 313, and the finished product/semi-finished product information 351 obtained by the product/service emission factor module 315 from the operational boundary sales record 303.

Next, the used carbon emission module 334 enables the enterprise to calculate the carbon emissions of the product lines, series, and part numbers of the all-product carbon footprint inventory and service, including obtaining the finished product/semi-finished product information 351 from the product/service emission factor module 315 and the use scenario configuration 353. The disposed carbon emission module 335 enables the enterprise to calculate the disposed carbon emissions of the product lines, series, and part numbers for all-product carbon footprint inventory and service. Data sources include the finished product/semi-finished product information 351 obtained from the product/service emission factor module 315, and the disposal scenario configuration 355 mainly obtained from the operational boundary sales record 303.

Furthermore, the energy resource setting module 336 provided by the high-efficiency product carbon footprint inventory system 300 is used for a manufacturing emission source setting, a product line and series exclusion setting, an allocation criterion setting, and a carbon border tariff setting; energy resources allocation are automatically performed based on the manufacturing-related emission sources in the data of the operational boundary organization greenhouse gas inventory 301 of the enterprise, such that corresponding emission source proportions can be assigned to the product lines, series, and part numbers of the all-product carbon footprint inventory and service.

The manufacturing emission source setting in the energy resource setting module 336 is to set the emissions of emission sources within the operational boundaries of the enterprise, and select relevant emission sources of the product lines, series, and part numbers for the all-product carbon footprint inventory and service; the allocation criterion setting is to give different allocation principles to the selected emission sources, such as volume allocation, weight allocation, processing time allocation, and quantity allocation, etc.; and the product line and series exclusion setting is for the selected emission sources to execute exclusion setting of product lines, series, and part numbers, so as to exclude emission sources exclusively for specific product lines, series, and part numbers.

In this way, through the operation of the raw material acquisition carbon emission module 331, the manufacturing/service carbon emission module 332, the sales and distribution carbon emission module 333, the used carbon emission module 334, and the disposed carbon emission module 335 in the high-efficiency product carbon footprint inventory system 300, results of carbon footprint inventory of products/services of finished/semi-finished products 338 are generated, and carbon emission of a full life cycle or a part of the full life cycle of the product lines, series, and part numbers of the all-product carbon footprint inventory and service calculated by the enterprise is obtained.

Furthermore, the server system that runs the high-efficiency product carbon footprint inventory system 300 further includes a dashboard module 339, which provides emissions and emission hotspot analysis reports that display the product lines, series, and part numbers of the all-product carbon footprint inventory and service to the enterprise based on the results of the carbon footprint inventory of products/services of finished/semi-finished products 338. A reporting module 340 can then be used to selectively issue corresponding inventory list and report of the product lines, series, and part numbers of the all-product carbon footprint inventory and service to the enterprise, and output a carbon-related management document according to a stakeholder demand format 305. According to one embodiment, the stakeholder demand format 305 described herein is a data format developed based on the requirements of national carbon labels, carbon border tariffs, brand factories, or supply chains.

Finally, the high-efficiency product carbon footprint inventory system 300 does not exclude the inclusion of miscellaneous modules 337. For example, in order to comply with standards set by specific international organizations, such as ISO 14067 or other relevant verification regulations, additional functional modules can be provided as required.

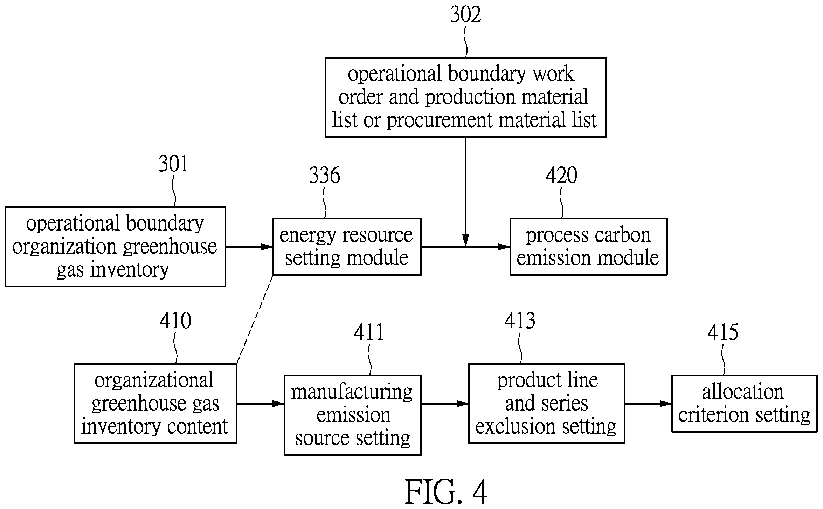

Next, to implement the energy resource setting module 336 in the high-efficiency product carbon footprint inventory system 300, reference can be further made to the schematic functional diagram of one embodiment of an energy resource setting module shown in FIG. 4.

After the energy resource setting module 336 executes the above-mentioned manufacturing emission source setting, the product line and series exclusion setting, the allocation criterion setting, and the carbon border tariff setting, the operational boundary organization greenhouse gas inventory 301 imports the operational boundary work order and production material list or procurement material list 302, so as to provide a process carbon emission module 420 to obtain the carbon emissions of products manufactured or services provided by each of the product lines, series, part number, etc. in the process, or relevant emission factor, as described in the following implementations.

By setting the proportions of various carbon emission sources through the energy resource setting module 336, and obtaining organizational greenhouse gas inventory content 410, a manufacturing emission source setting 411, a product line and series exclusion setting 413, and an allocation criterion setting 415 and other settings shown in FIG. 4 can be provided according to the above-mentioned embodiments. Among the settings, the manufacturing emission source setting 411 sis to set the emissions of emission sources within an operational boundary of the enterprise, and select emission sources that are relevant to the product lines, series, and part numbers of the all-product carbon footprint inventory and service; the product line and series exclusion setting 413 is for the selected emission sources to execute exclusion setting of product lines, series, and part numbers, indicating that some apparatus emission sources are only used for specific product lines, series, and part numbers and exclusion setting should be carried out; the distribution criterion setting 415 is to give different allocation principles to the selected emission sources, such as volume allocation, weight allocation, processing time allocation, and quantity allocation, etc. However, an actual operation is not limited to the scope of the embodiment shown in the figure. In this way, carbon emissions from various carbon emission sources can be calculated at one time, and carbon-related management documents can be issued for enterprises.

The following are examples of implementations of high-efficiency product carbon footprint inventory systems and high-efficiency product carbon footprint inventory systems methods.

### [Example 1]

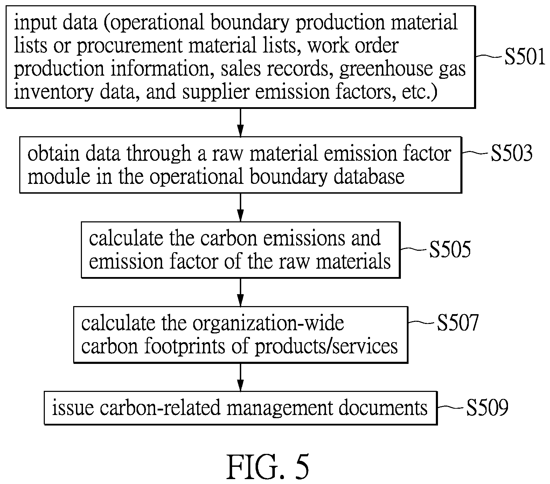

Reference can also be made to the embodiment flowchart as shown in FIG. 5. Input data obtained by the high-efficiency product carbon footprint inventory system (step S501) includes operational boundary work order production information and production material lists or procurement material lists, sales records, greenhouse gas inventory data, and supplier emission factors, etc., and relevant data can be obtained through a raw material emission factor module in the operational boundary database (step S503).

The obtained operational boundary work order production information and production material lists or procurement material lists can be referred to in Table 1. The fields recorded in the table are such as (the actual implementation is not limited to the content of this embodiment) work order productions, date-work order numbers, semi-finished product part numbers, component part numbers, supplier codes, manufacturer codes, work order production quantity of semi-finished products, actual consumptions of components, and work order processing time.

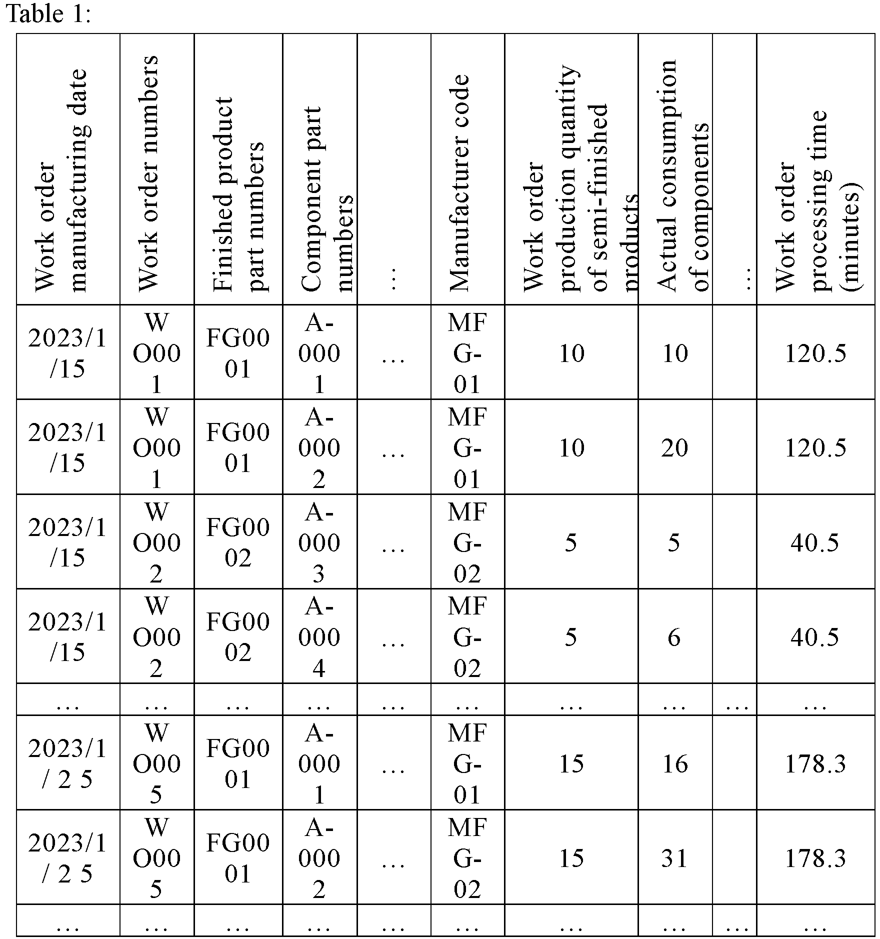

Next, the data received by the system also includes operational boundary work order production information and the production material list or the procurement material list. The relevant fields are as shown in Table 2 (but are not limited to this embodiment), and include manufacturing date, component part number, supplier code, and manufacturer code information. In this way, the raw material emission factor module can be automatically imported to obtain part number net weight data or priority calculation data and part emission factor information in corresponding raw material emission factor version information that conforms to the selected manufacturing date..

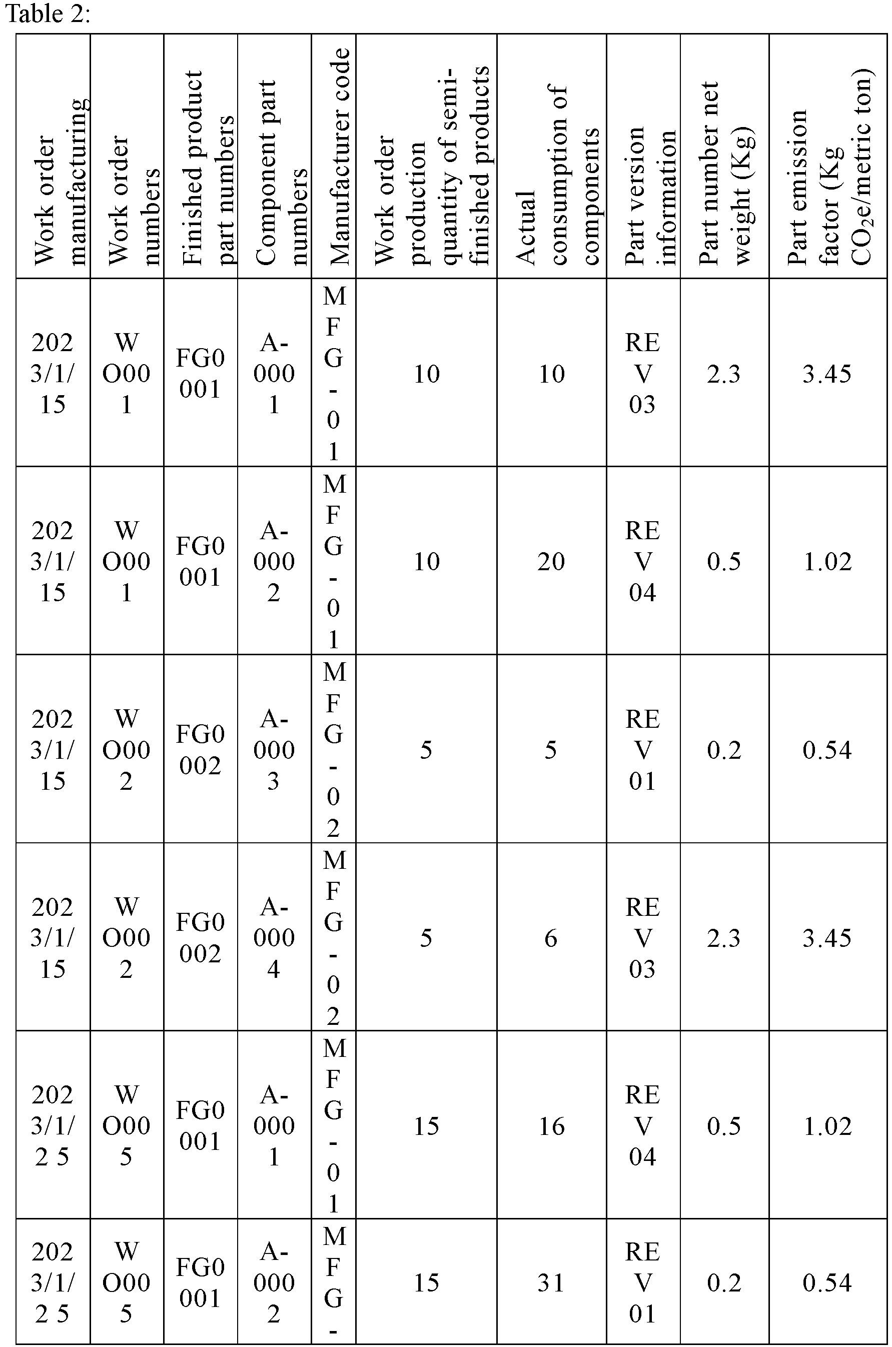

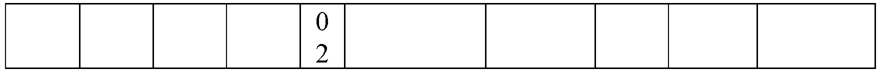

Next, the carbon emissions and emission factor of the raw materials from the raw material acquisition are calculated (step S505). An implementation example is as shown in Table 3.

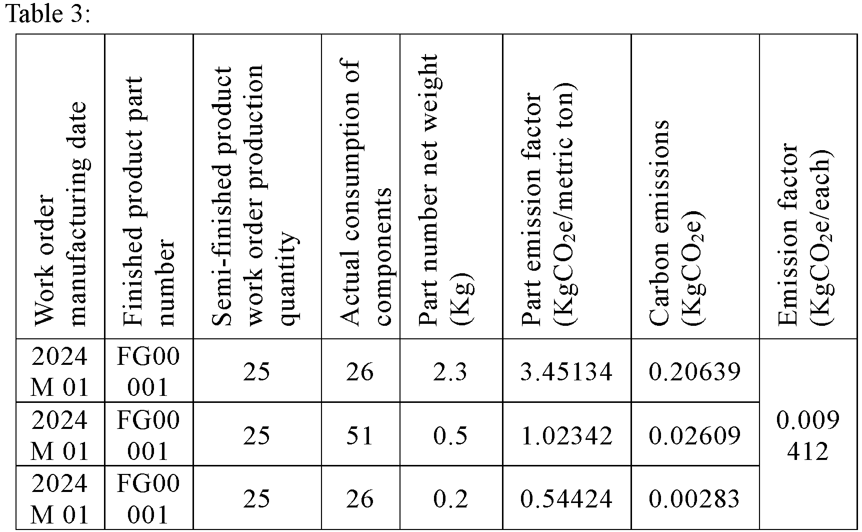

The above steps only complete the acquisition of raw materials (emission factors of the raw materials) for one series of finished products for one organization. Furthermore, through the high-efficiency product carbon footprint inventory system and method provided in the present invention, the calculation of organization-wide carbon footprints of products/services (step S507) can also be completed at one time, coupled with the relevant data update mechanism, the emission factor version control of the supply chain can be automatically updated, so as to instantly update the carbon footprint of the products/services of the entire organization, and instantly issue carbon-related management documents as required by different stakeholders (step S509).

### [Example 2]

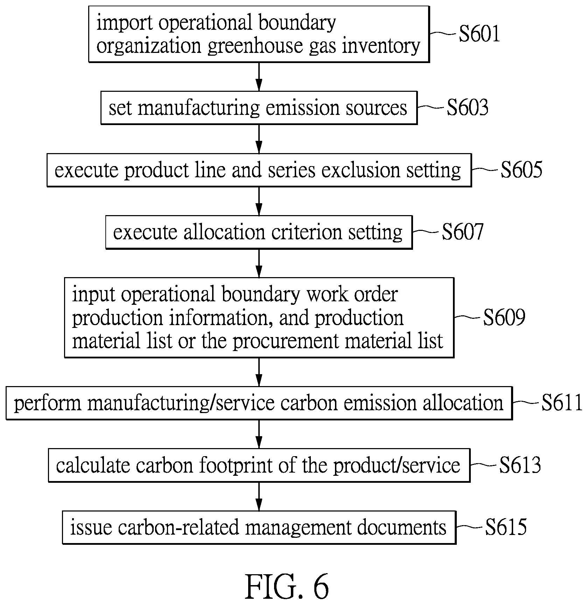

Reference can be made to FIG. 6, and FIG. 6 is a flowchart of an embodiment of the high-efficiency product carbon footprint inventory method, in which relevant data of the operational boundary organization greenhouse gas inventory is obtained through the server system. After the execution of the energy resource setting module, the allocation of specific emission sources is calculated for the carbon emissions and coefficients of the manufacturing process, and relevant examples are as follows.

When the relevant data of the operational boundary organization greenhouse gas inventory is obtained, it is automatically imported into the system (step S601). An example of greenhouse gas inventory data can be found in Table 4.

**Table 4:**

| Category | | Emission source items | Total emissions | |
|---|---|---|---|---|
| | | Total emission source items | Emissions | Unit |
| Category 1 - Direct Greenhouse Gas (GHG) Emissions and Removals | | | | |
| | Category 1.1 - Direct emissions from stationary combustion | 12 | 35.1220 | Metric tons CO₂e |
| | Category 1.2 - Direct emissions from mobile combustion | 15 | 34.2400 | Metric tons CO₂e |
| | Category 1.3 - Direct process emissions and removals from industrial processes | 13 | 103.2000 | Metric tons CO₂e |
| | Category 1.4 - Direct fugitive emissions from the release of GHGs in anthropogenic systems | 6 | 8.1500 | Metric tons CO₂e |
| | Category 1.5 - Direct emissions and removals from land use, land use change and | 0 | 0.0000 | Metric tons CO₂e |
| | forestry (LULUCF) | | | |

| Category 2 - Indirect GHG emissions from imported energy | | | | |
|---|---|---|---|---|
| | Category 2.1 - Indirect emissions from imported electricity | 1 | 475.000 | Metric tons CO₂e |
| | Category 2.2 - Indirect emissions from imported energy | 1 | 100.000 | Metric tons CO₂e |

| Category 3 - Indirect GHG emissions from transportation | | | | |
|---|---|---|---|---|
| | Category 3.1 - Emissions from upstream transport and distribution for goods | 5 | 23.0000 | Metric tons CO₂e |
| | Category 3.2 - Emissions from downstream transport and distribution for goods | 5 | 43.0000 | Metric tons CO₂e |
| | Category 3.3 - Emissions from employee commuting | 5 | 3.0000 | Metric tons CO₂e |
| | Category 3.4 - Emissions from business travel | 5 | 1.5000 | Metric tons CO₂e |
| | Category 3.5 - Emissions from client and visitor transport | 5 | 0.1230 | Metric tons CO₂e |

| Category 4 - Indirect GHG emissions from products used by an organization | | | | |
|---|---|---|---|---|
| | Category 4.1 - Emissions from purchased goods and services | 5 | 52.0000 | Metric tons CO₂e |
| | Category 4.2 - Emissions associated with the production of energy purchased | 40 | 12.0000 | Metric tons CO₂e |
| | Category 4.3 - Emissions from the disposal of solid and liquid waste | 4 | 5.0000 | Metric tons CO₂e |
| | Category 4.4 - Emissions from purchased capital goods | 5 | 1.5000 | Metric tons CO₂e |
| | Category 4.5 - Emissions from leased assets | 0 | 0.0000 | Metric tons CO₂e |

| Category 5 - Indirect GHG emissions associated with the use of products from the organization | | | | |
|---|---|---|---|---|
| | Category 5.1 - Emissions or removals from the use | 4 | 4 50,000.000 | Metric tons |
| | stage | | | CO₂e |
| | Category 5.2 - Processing of sold products | 0 | 0.0000 | Metric tons CO₂e |
| | Category 5.3 - Emissions from end of life stage of the product | 4 | 121.0000 | Metric tons CO₂e |
| | Category 5.4 - Emissions from downstream leased assets | 0 | 0.0000 | Metric tons CO₂e |
| | Category 5.5 - Franchises | 0 | 0.0000 | Metric tons CO₂e |
| | Category 5.6 - Emissions from investments | 0 | 0.0000 | Metric tons CO₂e |

| Category 6 - Indirect GHG emissions from other sources | | | | |
|---|---|---|---|---|
| | Category 6.1 - Other sources | 0 | 0.0000 | Metric tons CO₂e |

Afterwards, the manufacturing emission sources are set (step S603). After setting the emissions of the emission sources within the operational boundary, the relevant emission sources for the product lines, series, and part numbers for all-product carbon footprint inventory and service can be selected. Reference can be made to Table 5 for an example of manufacturing emission source setting.

**Table 5:**

| Categories | | Emission source items | Total emissions | | Related to manufact uring process (Y/N) |
|---|---|---|---|---|---|
| | | Total emission source items | Emissions | Unit | |
| Category 1 - Direct GHG Emissions and Removals | | | | | |
| | Category 1.1 - Direct emissions from stationary combustion | 1 | 3.0000 | Metric tons CO₂e | Y |
| | | 1 | 2.0000 | Metric tons CO₂e | N |
| | | ... | ... | ... | ... |
| | | 1 | 2.0000 | Metric tons CO₂e | N |
| | | 1 | 4.0000 | Metric tons CO₂e | Y |
| | Category 1.2 - Direct emissions from mobile combustion | 15 | 34.2400 | Metric tons CO₂e | Same as above |
| | Category 1.3 - Direct process emissions and removals from industrial processes | 13 | 103.2000 | Metric tons CO₂e | |
| | Category 1.4 - Direct fugitive emissions from the release of GHGs in anthropogenic systems | 6 | 8.1500 | Metric tons CO₂e | |
| | Category 1.5 - Direct emissions and removals from land use, land use change and forestry (LULUCF) | 0 | 0.0000 | Metric tons CO₂e | |

| Category 2 - Indirect GHG emissions from imported energy | | | | | |
|---|---|---|---|---|---|
| | Category 2.1 - Indirect emissions from imported electricity | 1 | 475.000 | Metric tons CO₂e | Y |
| | Category 2.2 - Indirect emissions from imported energy | 1 | 100.000 | Metric tons CO₂e | Y |

Then, a product line and series exclusion setting is performed (step S605), in which product lines, series, and part numbers are excluded for the selected emission sources. That is, certain apparatus emission sources are only used for specific product lines, series, and part numbers, and exclusion setting should be performed. Reference can be made to Table 6 for an example of relevant product line and series exclusion setting.

**Table 6:**

| Category | | Emission source items | Total emissions | | Related to manufacturing process (Y/N) | Product line and series exclusion setting |
|---|---|---|---|---|---|---|
| | | Total emission source items | Emissions | Unit | | |
| Category 1 - Direct GHG Emissions and Removals | | | | | | |
| | Category 1.1 - Direct emissions from stationary combustion | 1 | 3.0000 | Metric tons CO₂e | Y | Apportion ed across the entire series |
| | | 1 | 2.0000 | Metric tons CO₂e | N | No settings required |
| | | ... | ... | ... | ... | No settings required |
| | | 1 | 2.0000 | Metric tons CO₂e | N | No settings required |
| | | 1 | 4.0000 | Metric tons CO₂e | Y | Exclude laptop product line |
| | Category 1.2 - Direct emissions from mobile combustion | 15 | 34.2400 | Metric tons CO₂e | Same as above | Same as above |
| | Category 1.3 - Direct process emissions and removals from industrial processes | 13 | 103.2000 | Metric tons CO₂e | | |
| | Category 1.4 - Direct fugitive emissions from the release of GHGs in anthropoge nic systems | 6 | 8.1500 | Metric tons CO₂e | | |
| | Category 1.5 - Direct emissions and removals from land use, land use change and forestry (LULUCF) | 0 | 0.0000 | Metric tons CO₂e | | |

| Category 2 - Indirect GHG emissions from imported energy | | | | | | |
|---|---|---|---|---|---|---|
| | Category 2.1 - Indirect emissions from imported electricity | 1 | 475.000 | Metric tons CO₂e | Y | Apportion ed across the entire series |
| | Category 2.2 - Indirect emissions from imported energy | 1 | 100.000 | Metric tons CO₂e | Y | Apportion ed across the entire series |

Afterwards, the system executes allocation criterion setting (step S607), and different allocation principles can be given to the selected emission sources, such as volume allocation, weight allocation, processing time allocation, quantity allocation, etc. Reference can be made to Table 7 for an example of allocation criterion setting.

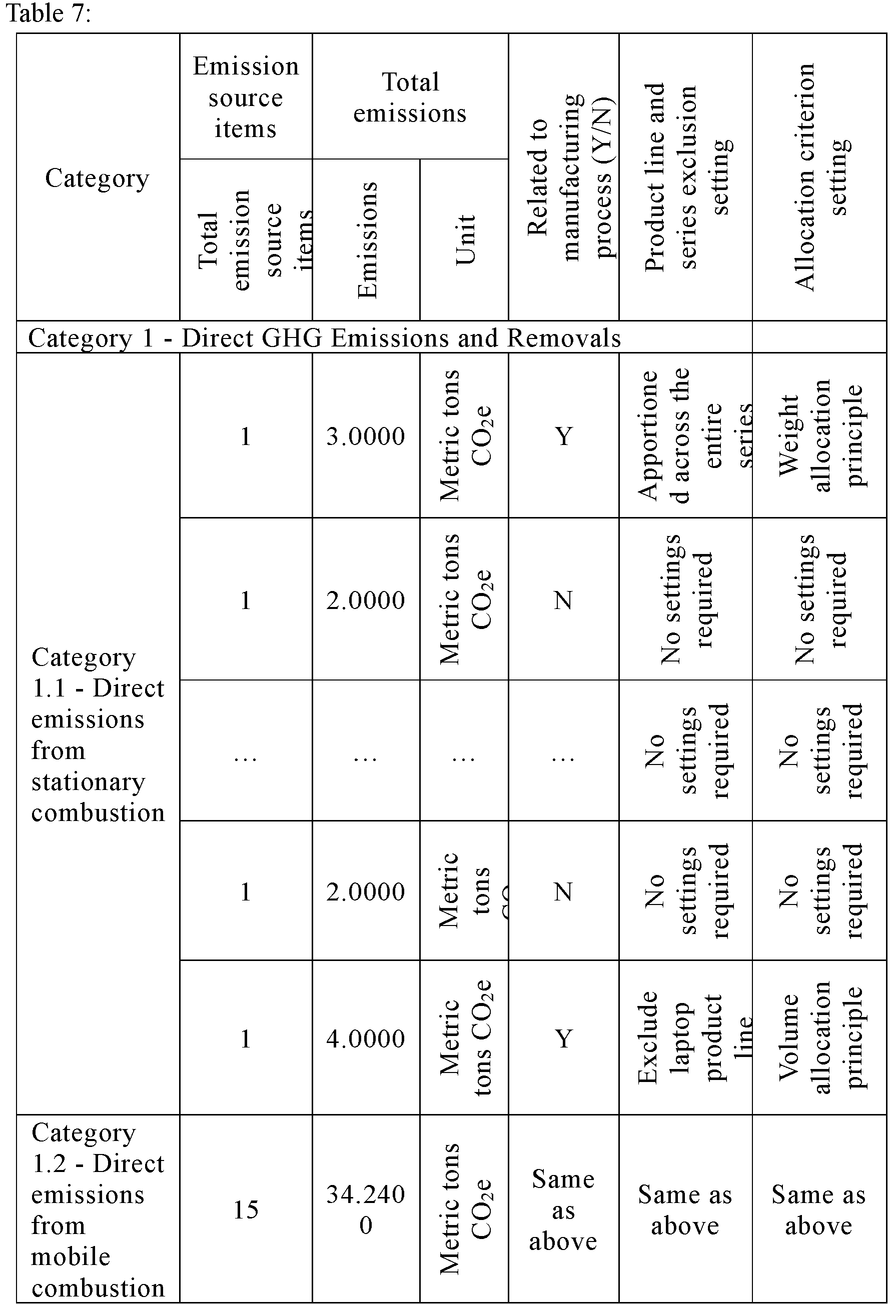

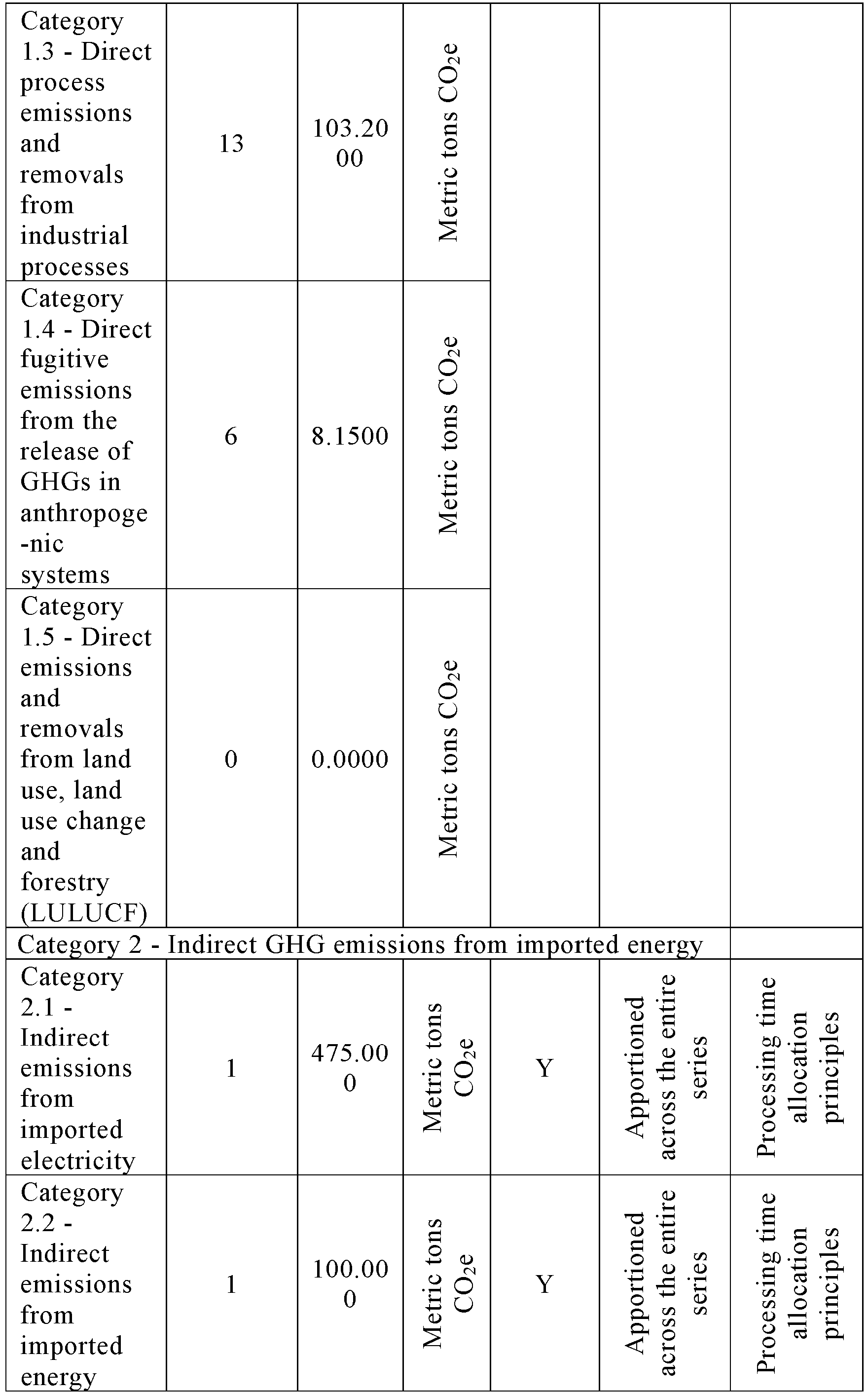

Therefore, data can be input based on the above-mentioned settings, such as operational boundary work order production information, and production material list or the procurement material list (step S609). For relevant fields, reference can be made to Table 2 above. Then, through the manufacturing/service carbon emission module in the server system, the enterprise can simultaneously calculate the manufacturing carbon emissions of the product lines, series, and part numbers of the all-product carbon footprint inventory and service, and perform manufacturing/service carbon emission allocation (Step S611). Then, the carbon footprint of the product/service is calculated based on the allocation setting and the emission factor obtained in the above steps (step S613). An example of the results can be found in Table 8, and carbon-related management documents can be issued accordingly (step S615).

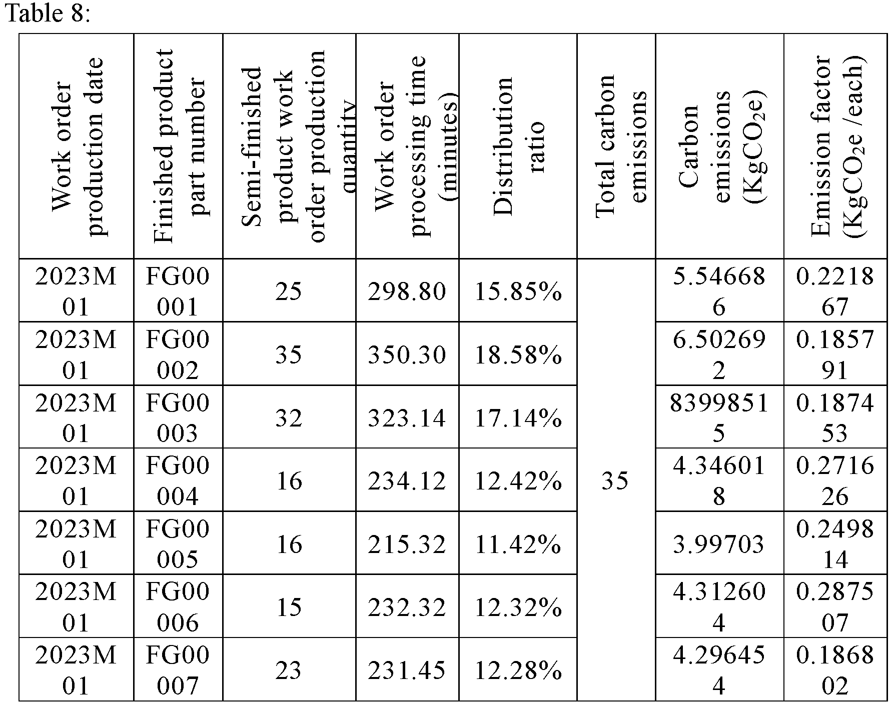

In summary, according to the above embodiments of the high-efficiency product carbon footprint inventory method, the method conducts carbon footprint inventory based on the full-product line operated by the enterprise, including raw material acquisition, production and manufacturing, sales and distribution, consumer using products, and final disposal of products. Specifically, computer technology is used to automatically perform carbon footprint inventory based on the carbon data structure, aggregation, and carbon emission calculation logic to provide efficient product carbon footprint inventory, so as to save large amount of manpower and time, avoid duplicated data and simplify inventory process. Finally, carbon-related management documents can be provided according to the requirements of stakeholders.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A high-efficiency product carbon footprint inventory system (300), **characterized by** comprising:
a server system used to perform calculation, storage, and data transmission in the high-efficiency product carbon footprint inventory system (300) to run the high-efficiency product carbon footprint inventory system (300), wherein the server system includes:
an operational boundary database (310) receiving data provided by multiple data sources, including operational boundary organizational greenhouse gas inventory data, a production material list or a procurement material list (302), work order production information, data of operational boundary sales record (303), and supplier emission factor data (304) of an operational boundary; and
an energy resource setting module (336) automatically allocating energy resources for manufacturing-related emission sources in the operational boundary organizational greenhouse gas inventory data of an enterprise, so that corresponding emission source proportions are assigned to product lines, series, and part numbers of an all-product carbon footprint inventory and service;
wherein the server system further includes a raw material acquisition carbon emission module (331), a manufacturing/service carbon emission module (332), a sales and distribution carbon emission module (333), a used carbon emission module (334), a disposed carbon emission module (335), and the energy resource setting module (336) that are implemented by a computer system;
wherein the raw material acquisition carbon emission module (331) enables the enterprise to calculate raw material acquisition carbon emissions for the product lines, series, and part numbers of the all-product carbon footprint inventory and service; the manufacturing/service carbon emission module (332) enables the enterprise to calculate manufacturing carbon emissions for the product lines, series, and part numbers of the all-product carbon footprint inventory and service; the sales and distribution carbon emission module (333) enables the enterprise to calculate sales and distribution carbon emissions for the product lines, series, and part numbers of the all-product carbon footprint inventory and service; the used carbon emission module (334) enables the enterprise to calculate used carbon emissions for the product lines, series, and part numbers of the all-product carbon footprint inventory and service; the disposed carbon emission module (335) enables the enterprise to calculate disposed carbon emissions for the product lines, series, and part numbers of the all-product carbon footprint inventory and service.

2. The high-efficiency product carbon footprint inventory system (300) according to claim 1, wherein, through an operation of the raw material acquisition carbon emission module (331), the manufacturing/service carbon emission module (332), the sales and distribution carbon emission module (333), the used carbon emission module (334), and the disposed carbon emission module (335), results of the carbon footprint inventory of products/services of finished/semi-finished products are generated, and the results include carbon emissions of a full life cycle or a part of the full life cycle of the product lines, series, and part numbers of the all-product carbon footprint inventory and service calculated by the enterprise.

3. The high-efficiency product carbon footprint inventory system (300) according to claim 2, wherein the server system includes a dashboard module (339) to provide emissions and emission hotspot analysis reports that display the product lines, series, and part numbers of the all-product carbon footprint inventory and service to the enterprise.

4. The high-efficiency product carbon footprint inventory system (300) according to claim 3, wherein the server system includes a reporting module (340) to selectively issue corresponding inventory list and report of the product lines, series, and part numbers of the all-product carbon footprint inventory and service to the enterprise, and output a carbon-related management document according to a stakeholder demand format that is a data format based on requirements of national carbon labels, carbon border tariffs, brand factories, or supply chains.

5. The high-efficiency product carbon footprint inventory system (300) according to claim 1, wherein the energy resource setting module (336) is used for manufacturing emission source setting (411), product line and series exclusion setting (413), allocation criterion setting, and carbon border tariff setting.

6. The high-efficiency product carbon footprint inventory system (300) according to claim 5, wherein the manufacturing emission source setting (411) is to set the emissions of emission sources within an operational boundary of the enterprise, and select emission sources that are relevant to the product lines, series, and part numbers of the all-product carbon footprint inventory and service, and the allocation criterion setting is to provide different allocation principles to the selected emission sources.

7. The high-efficiency product carbon footprint inventory system (300) according to claim 5, wherein the product line and series exclusion setting (413) is for the selected emission sources to execute exclusion settings of product lines, series, and part numbers, so as to exclude emission sources exclusively for specific product lines, series, and part numbers.

8. The high-efficiency product carbon footprint inventory system (300) according to claim 1, wherein the operational boundary organizational greenhouse gas inventory data of the enterprise obtained by the operational boundary database (310) is third-party digital platform data or a carbon inventory table having a specific format provided by the operational boundary.

9. The high-efficiency product carbon footprint inventory system (300) according to claim 8, wherein the operational boundary database (310) obtains data through following modules, including:
a raw material emission factor module (311) to record a raw material emission factor and supporting data of the operational boundary;
a transportation emission factor module (313) to record emission factors of raw material acquisition and transportation (3131), waste transportation (3133), and sales and distribution transportations (3135); and
a product/service emission factor module (315) to record acquisition of finished product/semi-finished product information (351), a use scenario configuration (353), and a disposal scenario configuration (355).

10. The high-efficiency product carbon footprint inventory system (300) according to claim 1, wherein an application programming interface is provided, and operational data, forms, or single activities of an organizational operational boundary are connected through the application programming interface, so that the operational boundary database (310) obtains the production material list or the procurement material list and the work order production information of the operational boundary that include production work orders and production materials or procurement material data of the organizational operational boundary within a duration, and the data of operational boundary sales record (303) obtained by the operational boundary database (310) includes sales data of the organizational operational boundary obtained through the application programming interface within the duration.

11. A high-efficiency product carbon footprint inventory method executed in a server system, **characterized by** comprising:
creating an operational boundary database (310) in the server system to accept data provided by multiple data sources, including operational boundary organizational greenhouse gas inventory data, a production material list or a procurement material list, work order production information, data of operational boundary sales record (303), and supplier emission factor data (304) of an operational boundary;
based on the production material list or the procurement material list, and the work order production information of the operational boundary, calculating raw material acquisition carbon emissions, manufacturing carbon emissions, sales and distribution carbon emissions, used carbon emissions, and disposed carbon emissions for the product lines, series, and part numbers of the all-product carbon footprint inventory and service of an enterprise;
executing an allocation criterion setting (415) to automatically allocate energy resources to various carbon emission sources in the operational boundary organizational greenhouse gas inventory data of the enterprise, so that corresponding emission source proportions are assigned to the product lines, series, and part numbers of the all-product carbon footprint inventory and service;
calculating an organization-wide product/service carbon footprint for the enterprise based on the corresponding emission source proportions of the product lines, series, and part numbers of the all-product carbon footprint inventory and service of the enterprise; and
issuing carbon-related management documents for the enterprise.

12. The high-efficiency product carbon footprint inventory method according to claim 11, wherein the production material list or the procurement material list, and the work order production information of the operational boundary include work order productions, date-work order numbers recording a manufacturing date, semi-finished product part numbers, component part numbers, supplier codes, manufacturer codes, work order production quantity of semi-finished products, actual consumptions of components, and work order processing time.

13. The high-efficiency product carbon footprint inventory method according to claim 11, wherein the allocation criterion setting (415) is to provide different allocation principles to the selected emission sources, and the allocation criterion setting (415) includes volume allocation, weight allocation, processing time allocation, and quantity allocation.

14. The high-efficiency product carbon footprint inventory method according to claim 11, wherein the operational boundary organizational greenhouse gas inventory data of the enterprise obtained by the operational boundary database (310) is third-party digital platform data or a carbon inventory table having a specific format provided by the operational boundary.

15. The high-efficiency product carbon footprint inventory method according to claim 14, wherein data recorded in the operational boundary database (310) includes a raw material emission factor and supporting data of the operational boundary, emission factors of raw material acquisition and transportation, waste transportation, and sales and distribution transportations, and finished product/semi-finished product information, a use scenario configuration, and a disposal scenario configuration; and the server system provides an application programming interface, and operational data, forms, or single activities of an organizational operational boundary are connected through the application programming interface, so that the operational boundary database (310) obtains the production material list or the procurement material list and the work order production information of the operational boundary that include production work orders and production materials or procurement material data of the organizational operational boundary within a duration, and the data of operational boundary sales record (303) obtained by the operational boundary database (310) includes sales data of the organizational operational boundary obtained through the application programming interface within the duration.
